**Europäisches Patentamt**

**European Patent Office**

**Office européen des brevets**

(11) Veröffentlichungsnummer: **0 164 091**
**B1**

(12) **EUROPÄISCHE PATENTSCHRIFT**

(45) Veröffentlichungstag der Patentschrift:
**05.10.88**

(21) Anmeldenummer: **85106840.3**

(22) Anmeldetag: **04.06.85**

(51) Int. Cl.⁴: **B 25 J 15/04**

(54) Vorrichtung zum automatischen Erfassen bzw. Lösen eines Werkzeugträgers bei einem Manipulator.

(30) Priorität: **08.06.84 DE 3421452**

(43) Veröffentlichungstag der Anmeldung:
**11.12.85 Patentblatt 85/50**

(45) Bekanntmachung des Hinweises auf die Patenterteilung:
**05.10.88 Patentblatt 88/40**

(84) Benannte Vertragsstaaten:
**DE FR GB SE**

(56) Entgegenhaltungen:
**EP - A - 0 043 153**
**EP - A - 0 092 967**
**DE - A - 3 310 070**
**US - A - 4 274 314**

(73) Patentinhaber: **KUKA Schweissanlagen & Roboter GmbH, Blücherstrasse 144, D-8900 Augsburg (DE)**

(72) Erfinder: **Zimmer, Ernst, Michael-Steinherr-Strasse 34, D-8904 Friedberg (DE)**
Erfinder: **Kikut, Botho, Novalisstrasse 10, D-8900 Augsburg (DE)**

(74) Vertreter: **Ernicke, Hans-Dieter, Dipl.-Ing. et al, Schwibbogenplatz 2b, D-8900 Augsburg (DE)**

## Beschreibung

Die Erfindung bezieht sich auf eine Vorrichtung zum automatischen Erfassen bzw. Lösen eines Werkzeugträgers durch das letzte Getriebeglied eines mehrachsig aufgebauten Manipulators, bei der das letzte Getriebeglied und der Werkzeugträger gegeneinander verschraubbare Kupplungsteile tragen und der Drehantrieb des letzten Getriebegliedes als Energiequelle zur Verschraubung der beiden durch Steuerung des Manipulators in Eingriffsbereitschaft gebrachten Kupplungsteile vorgesehen ist.

Eine Vorrichtung mit diesen Merkmalen ist durch die FR-PS 2 426 548 bekannt geworden. Es wird davon ausgegangen, einem Manipulator mehrere Werkzeuge zuzuordnen, deren Wechsel möglichst rasch und auf automatische Weise erfolgen soll. Die hierbei verwendeten Kupplungsglieder sind nach Art eines Bajonettverschlusses aufgebaut, wobei die Steigung der Gewindegänge verhältnismässig gering sind. Dies bedeutet, dass die beiden Kupplungsteile einander fast bis zur endgültigen Verspannungsstellung genähert werden, wobei die Schraubanordnungen der Kupplungsteile ineinandergreifen. Betätigt man den Rotationsantrieb des letzten Getriebeteiles des Manipulators, dann greifen die Bajonettverschlussteile ineinander ein und verriegeln die Kupplungsteile miteinander.

Die vorbekannte Wechselvorrichtung setzt voraus, dass die Anschlüsse für die Übergtragung von Energie, Kühlmittel, Druckmittel oder dgl. zwischen Manipulator und Werkzeugträger nachträglich manuell miteinander verbunden werden müssen.

Die Erfindung setzt sich daher zur Aufgabe, eine Vorrichtung zum automatischen Wechseln der Werkzeugträger bei Manipulatoren zu entwickeln, die während des Wechselvorganges zugleich ein automatisches Trennen oder Verbinden dieser Anschlussteile für Energie, Kühlmittel, Druckmittel und dgl. erlaubt, wobei jedoch dafür Sorge getragen werden muss, dass der Manipulator den für das Verbinden der Teile erforderlichen Schliessdruck nicht durch seine Getriebeglieder mit Ausnahme des letzten (Rotationsantrieb) aufzubringen hat.

Diese Aufgabe wird erfindungsgemäss dadurch gelöst, dass das mit dem letzten Getriebeglied verbundene Kupplungsteil aus zwei aneinander konzentrisch gelagerten Funktionsgliedern besteht, von denen das eine Funktionsglied beim Annähern der Kupplungsteile eine Drehsperre mit dem am Werkzeugträger befindlichen Kupplungsteil bildet und das andere Funktionsglied die Schraubenanordnung aufweist, wobei beide Funktionsglieder miteinander über ein unter der Einwirkung der Drehsperre lösbares Arretiergesperre verbunden sind.

Durch diese erfindungsgemässe Anordnung ist die Möglichkeit gegeben, an einander gegenüberliegenden Stellen des Werkzeugträgers einerseits und des beim Schrauben feststehenden Funktionsgliedes andererseits die für das Übertragen von Energie, Kühlmittel, Druckmittel oder dgl. erforderlichen Anschlussteile vorzusehen. Dies setzt allerdings voraus, dass im Gegensatz zum Stand der Technik Schraubanordnungen an den Kupplungsteilen verwendet werden, die bei einem verhältnismässig kleinen Verdrehwinkel eine verhältnismässig grosse Steigung besitzen, so dass die beiden Kupplungsteile sich beim Schraubvorgang noch eine beträchtliche Strecke, z.B. 18 bis 24 mm, einander nähern. Auf diese Weise wird der Hub erzeugt, der zum Verbinden der einzelnen Anschlussteile erforderlich ist. Für diesen Hub müssen die Anschlusteile gegen Verdrehung gesichert werden. Dies wird erfindungsgemäss dadurch erreicht, dass das die Anschlusteile tragende Funktionsglied beim Annähern der Kupplungsteile in den Werkzeugträger eingreift und damit eine Drehsperre bildet. Das die Schraubanordnung enthaltende Funktionsglied kann sich jedoch unter dem Antrieb des letzten Getriebegliedes drehen und den Schraubvorgang durchführen, weil es am ortsfest gehaltenen Funktionsglied drehbar gelagert ist. Diese Relativdrehbewegung beider Funktionsteile soll aber nur dann möglich sein, wenn der Werkzeugwechsel durch Verschraubung stattfindet. Im übrigen, insbesondere dann, wenn der Manipulator mit oder ohne Werkzeug bewegt wird, müssen die beiden Funktionsglieder drehschlüssig zueinander sein. Zu diesem Zweck sieht die Erfindung ein Arretiergesperre zwischen beiden Funktionsgliedern vor, das kraftschlüssig beaufschlagt ist und dessen Drehschluss nur dann aufgehoben ist, wenn der Schraubvorgang beim Werkzeugwechsel durchgeführt und das eine Funktionsglied drehstarr mit dem Werkzeugträger verbunden ist.

Mit den Unteransprüchen 2 bis 5 werden vorteilhafte Ausgestaltungen dieser Drehsperre und des Arretiergesperres offenbart, deren Vorteil unter anderem darin besteht, dass bei geringem Platzaufwand die geforderte Funktion sicher ausgeführt werden kann.

Mit den Ansprüchen 6 bis 8 werden vorteilhafte Ausgestaltungen der Schraubanordnung unter Schutz gestellt, mit deren Hilfe es möglich ist, ohne Aufbieten eines besonderen Anpressdruckes seitens des Manipulators eine erhebliche Annäherungsstrecke durch Schraubvorgang über einen kleinen Verdrehwinkel zu überwinden und die miteinander verbundenen Teile in der Schliessstellung selbsthemmend zu arretieren. Bei der vorbekannten Konstruktion ist die Selbsthemmung durch die geringe Steigung der Bajonett-Gewindegänge erreichbar. Der Gegenstand der Erfindung lässt eine solche Selbsthemmung nicht zu, weil die Schraubengänge besonders steil konzipiert sind und damit keinen Selbsthemmeffekt auslösen. Aus diesem Grunde wird der Schraubvorgang soweit geführt, bis die Schraubelemente auf einer zur Rotationsachse senkrechten Ebene zur Anlage kommen, wo gegebenenfalls auch eine Vertiefung zur Arretierung der erreichten Stellung führen kann.

Der Anspruch 9 stellt ein zweckmässiges konstruktives Ausführungsbeispiel dar, mit dem es möglich ist, die Elemente für die Schraubanordnung mit denjenigen Elementen für das Arretiergesperre funktionell zu verbinden.

Der Anspruch 10 bietet die Voraussetzung, mit dem Werkzeugwechsel gleichzeitig die Anschlussteile für Energie, Kühlmittel, Druckmittel und dgl. miteinander zu verbinden, wobei sichergestellt ist, dass diese Anschlussteile beim Schraubvorgang auch tatsächlich einander gegenüberliegen.

Der Anspruch 11 enthält eine vorteilhafte Ausführungsform zur Zentrierung der miteinander zu verbindenden Teile, wohingegen der Anspruch 12 eine Lehre aufzeigt, wie der Gegenstand der Erfindung über eine Abschaltsicherung mit dem letzten Getriebeglied des Manipulators verbunden werden kann. Die besondere Raumform dieser Abschaltsicherung ist Gegenstand einer anderen Erfindung (P 3 418 720). Der Anspruch 13 sichert das Aufbringen des notwendigen Schliessdrucks der Kupplungsteile ohne Überlastung der Schraubanordnungen und sorgt für Spielausgleich. Mit dem Gegenstand des Anspruches 14 werden schliesslich die Voraussetzungen für das Erreichen einer definierten Schliessendstellung der Kupplungsteile geschaffen.

Einzelheiten der Erfindung sind in der Zeichnung schematisch und beispielsweise dargestellt.

Es zeigen:

Fig. 1 eine schematische Darstellung eines Manipulators mit einer Vorrichtung zum automatischen Wechseln des Werkzeuges,

Fig. 2 einen Schnitt durch eine Prinzipskizze der Werkzeug-Wechselvorrichtung,

Fig. 3 einen Querschnitt durch eine konstruktive Ausführungsvariante der Werkzeug-Wechselvorrichtung,

Fig. 4 einen Teilschnitt (Abwicklung) entlang der Linie IV-IV durch die Schraubanordnung in Fig. 3 und

Fig. 5 eine Draufsicht (Abwicklung) auf das Arretiergesperre entsprechend dem Pfeil A in Fig. 3.

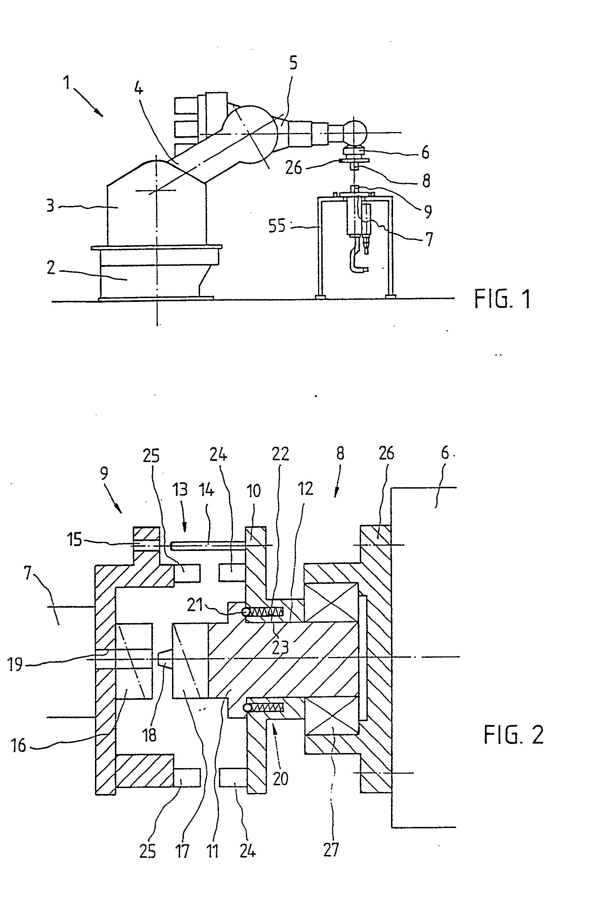

Die Fig. 1 soll schematisch den Ort des Gegenstandes der Erfindung zum besseren Verständnis der anderen Figuren aufzeigen. Danach ist bei einem Manipulator 1 irgendeiner Bauart vorgesehen, dass dessen letztes Getriebeglied 6 auf automatische Weise den Werkzeugträger 7 aufnehmen und absetzen kann, so dass der Manipulator 1 in der Lage ist, einen automatischen Wechsel zwischen mehreren solcher Werkzeugträger 7 vorzunehmen. Üblicherweise enthält der Manipulator 1 mehrere Achsen, die es ihm ermöglichen, jeden Punkt im Rahmen seines Wirkungsbereiches auf einer vorgegebenen Bahn anzufahren. Beim Beispiel der Fig. 1 weist der Manipulator 1 einen Sockel 2 auf, auf dem ein Drehteil 3 um eine vertikale Achse geführt ist. An diesem Drehteil 3 befindet sich ein Schwenkteil 4 und an diesem ein Schwenkteil 5, welche beide um horizontale Achsen drehbar gelagert sind. Auch das letzte Getriebeglied 6 ist um eine solche Achse schwenkbar am Schwenkteil 5 gelagert. Es kann natürlich auch das eine oder andere der Bauteile des Manipulators 1 eingespart oder in anderer Weise ausgestaltet sein.

Wesentlich ist, dass das letzte Getriebeglied 6 einen Flansch 26 aufweist, an dem üblicherweise der Werkzeugträger 7 befestigt wird.

Im vorliegenden Fall erfolgt die Befestigung des Werkzeugträgers 7 mit Hilfe von Kupplungsteilen 8, 9, die beim Annähern zwischen dem Werkzeugträger 7 und dem letzten Getriebeglied 6 ineinandergreifen und die feste Verbindung des Werkzeugträgers 7 mit dem letzten Getriebeglied 6 herbeiführen. Die verschiedenen Achsen des Manipulators 1 ermöglichen es, die Kupplungsteile 8, 9 in zueinander konzentrische Lage zu bringen.

Für diese Kupplungsteile 8, 9 gilt ferner die Bedingung, dass der Schliessdruck zum Befestigen des Werkzeugträgers 7 nicht von den Teilen 2 bis 5 des Manipulators 1 aufgebracht werden darf. Lediglich die im letzten Getriebeglied 6 in üblicher Weise mögliche Drehbewegung soll diesen Schliessdruck aufbringen, so dass lediglich das Drehmoment des hierfür erforderlichen Antriebsmotors beaufschlagt ist.

In Fig. 2 ist das Lösungsprinzip der Erfindung symbolisch dargestellt. Mit 8 und 9 sind die beiden Kupplungsteile in einer voneinander distanzierten Lage dargestellt, wobei jedes Kupplungsteil 8, 9 eine Schraubanordnung 16 bzw. 17 trägt. Beim Annähern der Kupplungsteile 8, 9 greift zunächst ein Zentrierbolzen 18 in eine passende Zentrierbohrung 19 ein, wonach die beiden Schraubanordnungen 16, 17 in eine Eingriffsbereitschaftsstellung zueinander gebracht werden. Das mit dem letzten Getriebeglied 6 verbundene Kupplungsteil 8 soll die Rotation des letzten Getriebegliedes 6 auf die Schraubanordnung 17 übertragen, die unter dem Eingriff mit der zugeordneten Schraubanordnung 16 am Kupplungsteil 9 die Annäherung beider Teile bis zur Schliessstellung herbeiführt.

Beim Gegenstand der Fig. 2 wird aber davon ausgegangen, dass die Kupplungsteile 8, 9 mit einem Anschlussteil 24 und einem Anschlussteil-Gegenstück 25 versehen sind, welchen die Aufgabe zugeordnet ist, während des Werkzeugwechsels automatisch eine Verbindung für die Übertragung von Energie, Kühlmittel, Druckmittel und dgl. vom Manipulator 1 zum Werkzeugträger 7 zu schaffen. Während diese Anschlussteile 24, 25 miteinander in Eingriff kommen, darf keine Relativdrehbewegung zwischen den Kupplungsteilen 8, 9 eintreten. Dies widerspricht an sich dem Grundgedanken, die Annäherung der Kupplungsteile 8, 9 durch Schraubanordnungen 16, 17 herbeizuführen.

Um diese Problematik zu lösen, ist das Kupplungsteil 8, welches mit dem letzten Getriebeglied 6 des Manipulators 1 verbunden ist, in zwei Funktionsglieder 10, 11 aufgeteilt, die aneinander bei 12 gelagert sind. Ein Arretiergesperre 20 hat die Aufgabe, diese beiden Funktionsglieder 10, 11 normalerweise drehschlüssig miteinander zu verbinden. Durch das letzte Getriebeglied 6 wird nämlich nur das Funktionsglied 11 angetrieben. Für den normalen Arbeitsbetrieb ist es aber erforderlich, dass auch das Funktionsglied 10 die gleiche Bewegung wie das Funktionsglied 11 ausführen muss. Das Arretiergesperre 20 besteht bei dem symbolischen Beispiel der Fig. 2 in üblicher Weise aus Kugeln 21, die von Federn 23 beaufschlagt sind, welche sich in Bohrungen 22 befinden. Auf diese Weise wird Drehschluss zwischen den Funktionsgliedern 10, 11 herbeigeführt, der aber bei Überwindung eines bestimmten Drehmomentes aufgehoben wird, indem die Kugeln 21 gegen die Wirkung der Federn 23 in die Bohrungen 22 ausweichen.

Das Funktionsglied 10 weist eine Drehsperre 13 auf, welche die Aufgabe hat, beim Annähern der Kupplungsteile 8, 9 eine drehstarre Verbindung zwischen dem Kupplungsteil 9 und dem Funktionsglied 10 herbeizuführen. Diese Drehsperre 13 besteht beim Ausführungsbeispiel aus einem Zentrierbolzen 14, der in eine passende Aussparung 15 des Kupplungsteiles 9 eingreift, bevor die Schraubanordnungen 16, 17 miteinander wirken können.

Der Werkzeugträger 7 ist mit seinem Kupplungsteil 9 an einem Gestell 55 oder dgl. in einer gegen Verdrehung gesicherten Stellung abgesetzt (Fig. 1).

Aus dieser Anordnung ergibt sich folgende Funktion:

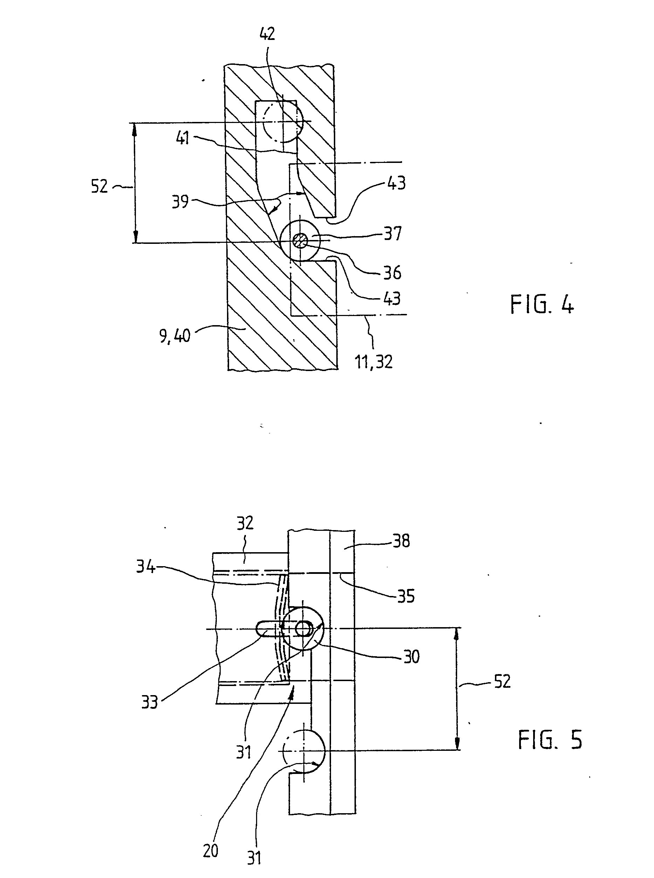

Zunächst wird der Manipulator 1 mit seinem letzten Getriebeglied 6 in eine koaxiale Lage zum Werkzeugträger 7 gebracht. In dieser koaxialen Lage gemäss Fig. 1 und 2 wird das letzte Getriebeglied 6 längs der Achse gegen den Werkzeugträger 7 bewegt, woraufhin zunächst die Drehsperre 13 durch Eingriff des Zentrierbolzens 14 in die Aussparung 15 wirksam wird. Zugleich sind dadurch die Schraubanordnungen 16, 17 zueinander in Schraubbereitschaftsposition gebracht worden. Diese Position entspricht in Fig. 4 der Stellung des Schraubelementes 37 im Einlaufschlitz 43 der Nabe 40. Programmiertechnisch kann sichergestellt werden, dass die koaxiale Stellung der Drehsperre 13 gefunden wird, wenn sich bei der Annäherung der Teile 8, 9 der Zentrierbolzen 14 nicht deckungsgleich gegenüber der Aussparung 15 befinden sollte.

Der Flansch 26 des letzten Getriebegliedes 6 kann nach erfolgter Zentrierung in Drehung versetzt werden. Über die Drehbewegung des Flansches 26 wird das Funktionsglied 11 mit der Schraubanordnung 17 in Rotation gebracht. Der Zentrierbolzen 18 greift in die Zentrierbohrung 19 ein und sichert die konzentrische Lage der Teile. Wenn die Drehsperre 13 wirksam ist, vermag das Ineinandergreifen der Schraubanordnungen 16, 17 nicht, die Verdrehung des Funktionsgliedes 10 herbeizuführen, denn dieses ist durch die Drehsperre 13 ortskonstant zum Werkzeugträger 7 gehalten, wobei sich der Werkzeugträger 7 drehschlüssig am Gestell 55 oder dgl. abstützt. Während sich aber die Kupplungsteile 8, 9 durch Ineinandergreifen der Schraubanordnungen 16, 17 nähern, können somit die Anschlussteile 24, 25 ineinandergreifen, weil sie nicht mehr relativ zueinander drehbewegt werden. Durch die Wirkung der Drehsperre 13 löst sich das Arretiergesperre 20, weil das vom letzten Getriebeglied 6 in das Funktionsglied 11 eingebrachte Drehmoment die Kugeln 21 bei feststehendem Funktionsglied 10 dazu bringt, gegen die Wirkung der Federn 23 in die Bohrung 22 auszuweichen.

In Fig. 2 ist ferner symbolisch eine Abschaltsicherung 27 dargestellt, welche den Flansch 26 mit dem Funktionsglied 11 verbindet. Diese Abschaltsicherung, die Gegenstand einer anderen Erfindung ist, aber auch nach dem Stand der Technik ausgebildet sein kann, sorgt dafür, dass der Antrieb des Manipulators 1 abgeschaltet wird, sobald das Werkzeug oder der Werkzeugträger 7 gegen einen unerwünschten Widerstand treffen.

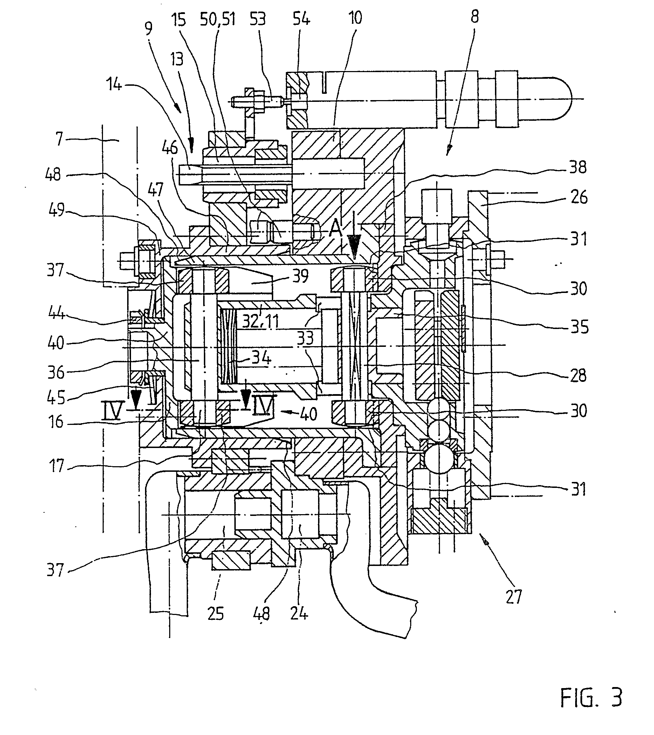

In Fig. 3 ist ein konstruktives Ausführungsbeispiel des in Fig. 2 dargestellten Erfindungsprinzipes gezeigt. Die konstruktiv dargestellte Abschaltsicherung 27 wird nicht beschrieben, weil sie Gegenstand einer anderen Erfindung ist. An deren Stelle kann aber auch eine andere Abschaltsicherung eingesetzt werden.

Beim Beispiel der Fig. 3 wird davon ausgegangen, dass der Flansch 26 über die Abschaltsicherung 27 auf eine Hohlwelle 32 treibt, die wesentlicher Bestandteil des Funktionsgliedes 11 (Fig. 2) ist. In dieser Hohlwelle 32 ist zunächst ein Bolzen 28 radial zur Drehachse angeordnet, der an seinen Enden zwei Rollen 30 als Arretierelemente aufweist. Diese Rollen 30 greifen normalerweise in Auskehlungen 31 ein, die sich stirnseitig an einer Flanschplatte 38 des anderen Funktionsgliedes 10 befinden. Der Bolzen 28 ist in einer als Kolben 35 ausgebildeten Führung gelagert. Dieser Kolben 35 bzw. der Bolzen 28 werden durch eine Feder 34 beaufschlagt, die innerhalb der Hohlwelle 32 angeordnet und an einer Stirnwand abgestützt ist. Der Bolzen 28 ist in dieser Hohlwelle 32 längs einer schlitzartigen Führung 33 (Langloch) axial beweglich geführt. Wenn das Funktionsglied 10 drehstarr gehalten wird, das Funktionsglied 11 mit seiner Hohlwelle 32 aber drehbeweglich angetrieben wird, dann rastet die einzelne Rolle 30 aus der Auskehlung 31 aus und lässt eine Relativdrehbewegung der Funktionsglieder 10, 11 zu. In der eingerasteten Stellung sorgt jedoch die einzelne Rolle 30 für eine Drehschlüssigkeit der Funktionsglieder 10, 11, die federmässig so stark eingestellt ist, dass ihr Lösen eine geringere Kraft als die Reaktion der Abschaltsicherung 27 bedingt.

Mit der gleichen Hohlwelle 32 ist ein sie radial durchragender Bolzen 36 verbunden, der an seinen Enden Rollen 37 als Schraubelemente trägt. Diese Schraubelemente 37 greifen in Schraubengangabschnitte 39 der Schraubanordnung 16 ein, wobei gemäss Fig. 4 zunächst ein achsparalleler Einlaufschlitz 43 vorgesehen ist, an den sich der Schraubengangabschnitt 39 mit grosser Steigung anschliesst. Diese grosse Steigung, die beispielsweise 18 bis 24 mm (axial gesehen) umfasst, soll dafür sorgen, unter Ausnutzung eines geringen Verdrehwinkels 52 die axiale Bewegung der Anschlussteile 24, 25 bis zur Endstellung sicherzustellen.

Es empfiehlt sich, am Ende des Schraubengangabschnittes 39 einen radial zur Rotationsachse sich erstreckenden Flächenabschnitt 41 vorzusehen, gegen den das Schraubelement 37 anliegt, wenn die Endstellung der Kupplungsteile 8, 9 erreicht ist. Auf diese Weise wird eine Selbsthemmung sichergestellt, die aber darüber hinaus verstärkt werden kann, wenn in dem radialen Flächenabschnitt 41 eine Vertiefung 42 für jedes Schraubelement 37 vorgesehen ist, die wie ein Gesperre wirkt.

Die Schraubanordnung 16 ist im Sinne des Ausführungsbeispieles der Fig. 3 in Form einer Nabe 40 ausgebildet, in deren Hohlraum die Hohlwelle 32 mit dem Bolzen 36 hineinragt. Diese Nabe 40 ist über eine Verschraubung 44 und eine Feder 45 mit einem Flansch 49 verbunden, der am Werkzeugträger 7 befestigt ist. Auf diese Weise wird sichergestellt, dass die Nabe 40 gegen die Wirkung der Feder 45 ein gewisses axiales Bewegungsspiel gegenüber dem Flansch 49 bzw. dem Werkzeugträger 7 besitzt. Diese Feder 45 ist – bezogen auf Fig. 4 – zugleich das Ausgleichselement, um den axialen Bewegungsunterschied beim Einrasten des Schraubelementes 37 in die Vertiefung 42 auszugleichen. Ausserdem gleicht die vorgespannte Feder 45 Impulse beim Aneinandertreffen der Schraubanordnungen 16, 17 bzw. der Kupplungsteile 8, 9 aus.

Die Zentrierung der Kupplungsteile 8, 9 wird beim Ausführungsbeispiel der Fig. 3 durch hohlzylinderförmige Wandungen 46, 47 der Kupplungsteile 8, 9 herbeigeführt, an deren Stirnseite sich entsprechende Abschrägungen 48 befinden, die das Ineinanderschieben erleichtern.

Das werkzeugseitige Kupplungsteil 9 und das gegen Verdrehung arretierbare Funktionsglied 10 des anderen Kupplungsteiles 8 weisen je drei einander entgegengerichtete Anschlagbolzen 50, 51 auf, die in der Schliessendstellung der Kupplungsteile 8, 9 aufeinandertreffen und eine definierte radiale Schliessebene bilden.

Die Schliessendstellung der Kupplungsteile 8, 9 wird durch Annäherung eines einstellbaren Schaltstiftes 53 an einen elektrischen Schalter 54 signalisiert, um die weiteren Arbeitsfolgen durch eine übergeordnete Steuerung einzuleiten.

Fig. 5 zeigt in einer Abwicklung das Arretiergesperre 20 der Fig. 3. Danach rastet die Rolle 30 bei dem vorgegebenen Verdrehwinkel 52 in beiden Endstellungen in Auskehlungen 31 ein, wobei die Einraststellung durch die Kraft der Feder 34 gesichert ist.

Eine andere, in der Zeichnung nicht dargestellte Variante des Arretiergesperres 20 kann mindestens einen pneumatisch geschalteten Bolzen enthalten, der die beiden Funktionsglieder 10, 11 in Arbeits- und bzw. Kuppelstellung gegeneinander verriegelt und beim Schraubvorgang in eine entriegelte Stellung gebracht wird.

*Stückliste*
1 Manipulator
2 Sockel
3 Drehteil
4 Schwenkteil
5 Schwenkteil
6 letztes Getriebeglied
7 Werkzeugträger
8 Kupplungsteil
9 Kupplungsteil
10 Funktionsglied
11 Funktionsglied
12 Lagerung
13 Drehsperre
14 Zentrierbolzen
15 Aussparung
16 Schraubanordnung
17 Schraubanordnung
18 Zentrierbolzen
19 Zentrierbohrung
20 Arretiergesperre
21 Kugel
22 Bohrung
23 Feder
24 Anschlussteil
25 Anschlussteil-Gegenstück
26 Flansch
27 Abschaltsicherung
28 Bolzen
29 –
30 Rolle (Arretierelemente)
31 Auskehlung (Gegenarretierelement)
32 Hohlwelle
33 Führung
34 Feder
35 Kolben (Führung)
36 Bolzen
37 Rolle (Schraubelement)
38 Flanschplatte
39 Schraubungsgangabschnitt
40 Nabe
41 radialer Flächenabschnitt
42 Vertiefung
43 Einlaufschlitz
44 Verschraubung
45 Feder
46 Wandung
47 Wandung
48 Abschrägung
49 Flansch
50 Anschlagbolzen
51 Anschlagbolzen
52 Verdrehwinkel
53 Schaltstift
54 elektrischer Schalter
55 Gestell

**Patentansprüche**

1. Vorrichtung zum automatischen Erfassen bzw. Lösen eines Werkzeugträgers (7) durch das letzte Getriebeglied (6) eines mehrachsig aufgebauten Manipulators (1), bei der das letzte Getriebeglied (6) und der Werkzeugträger (7) gegeneinander verschraubbare Kupplungsteile (8, 9) tragen und der Drehantrieb des letzten Getriebegliedes (6) als Energiequelle zur Verschraubung der beiden durch Steuerung des Manipulators (1) in Eingriffsbereitschaft gebrachten Kupplungsteile (8, 9) vorgesehen ist, dadurch gekennzeichnet, dass das mit dem letzten Getriebeglied (6) verbundene Kupplungsteil (8) aus zwei aneinander konzentrisch gelagerten Funktionsgliedern (10, 11) besteht, von denen das eine Funktionsglied (10) beim Annähern der Kupplungsteile (8, 9) eine Drehsperre (13) mit dem am Werkzeugträger (7) befindlichen Kupplungsteil (9) bildet und das andere Funktionsglied (11) eine Schraubanordnung (17) aufweist, die in Eingriff mit einer Schraubanordnung (16) des Werkzeugträgers (7) gebracht werden kann, wobei beide Funktionsglieder (10, 11) miteinander über ein unter der Einwirkung der Drehsperre (13) lösbares Arretiergesperre (20) verbunden sind.

2. Vorrichtung nach Anspruch 1, dadurch gekennzeichnet, dass die Drehsperre (13) aus mindestens einem Zentrierbolzen (14) besteht, der in eine passende Aussparung (15) des gegenüberliegenden Kupplungsteiles (9) eingreift.

3. Vorrichtung nach Anspruch 1 oder 2, dadurch gekennzeichnet, dass das die Schraubanordnung (17) aufweisende Funktionsglied (11) einen radial sich erstreckenden Bolzen (28) mit daran befindlichen Arretierelementen (30) aufweist, die unter axial wirkender Federkraft (34) in passende Gegenarretierelemente (31) des anderen Funktionsgliedes (10) eingreifen.

4. Vorrichtung nach Anspruch 3, dadurch gekennzeichnet, dass die Arretierelemente (30) als am Bolzen (28) drehbar gelagerte Rollen und die Gegenarretierelemente (31) als radial sich erstreckende, in einer Flanschplatte (38) befindliche Auskehlung ausgebildet sind.

5. Vorrichtung nach Anspruch 3 oder 4, dadurch gekennzeichnet, dass der Bolzen (28) bzw. dessen Führung (35) von einer axial wirkenden Feder (34) beaufschlagt ist, die sich auf der Schraubanordnung (17) abstützt.

6. Vorrichtung nach Anspruch 1 oder einem der folgenden, dadurch gekennzeichnet, dass die Schraubanordnung (16) mindestens einen Schraubengangabschnitt (39) mit grosser Steigung bei geringem Verdrehwinkel (52) aufweist.

7. Vorrichtung nach Anspruch 6, dadurch gekennzeichnet, dass der Schraubengangabschnitt (39) in einen etwa radial zur Drehachse sich erstreckenden Flächenabschnitt (41) übergeht, in dem gegebenenfalls eine Vertiefung (42) für das Einrasten des in den Schraubengangabschnitt (39) eingreifenden Schraubelementes (37) vorgesehen sein kann.

8. Vorrichtung nach Anspruch 6 oder 7, dadurch gekennzeichnet, dass die werkzeugseitige Schraubanordnung (16) eine Nabe (40) mit in deren Wandung eingearbeiteten Schraubengangabschnitten (39) aufweist, in welche an einem radial sich erstreckenden Bolzen (36) drehbar gelagerte Rollen als Schraubelemente (37) eingreifen.

9. Vorrichtung nach Anspruch 1 oder einem der folgenden, dadurch gekennzeichnet, dass das die Schraubanordnung (17) aufweisende Funktionsglied (11) als Hohlwelle (32) ausgebildet ist, welche von den beiden, die Arretier- und Schraubelemente (30, 37) führenden Bolzen (28, 36) radial durchsetzt ist, wobei der die Arretierelemente (30) aufweisende Bolzen (28) in der Hohlwelle (32) axial beweglich geführt (33, 35) und von einer in der Hohlwelle (32) angeordneten Feder (34) beaufschlagt ist.

10. Vorrichtung nach Anspruch 1 oder der folgenden, dadurch gekennzeichnet, dass an dem die Drehsperre (13) bildenden Funktionsglied (10) die Anschlussteile (24) für die Übertragung von Energie, Kühl- und/oder Druckmittel auf den Werkzeugträger (7) angeordnet sind und dass die Anschlussteil-Gegenstücke (25) deckungsgleich gegenüberliegend bei Wirkstellung der Drehsperre (13) am Werkzeugträger (7) bzw. dessen Kupplungsteil (9) angeordnet sind.

11. Vorrichtung nach Anspruch 1 oder einem der folgenden, dadurch gekennzeichnet, dass das die Drehsperre (13) bildende Funktionsglied (10) und der Werkzeugträger (7) einander entgegenragende hohlzylinderförmige Wandungen (46, 47) mit stirnseitigen Abschrägungen (48) als Zentriermittel aufweisen.

12. Vorrichtung nach Anspruch 1 oder einem der folgenden, dadurch gekennzeichnet, dass das die Schraubanordnung (17) aufweisende Funktionsglied (11) Bestandteil einer Abschaltsicherung (27) ist, die am Ausgangsflansch (26) des letzten Getriebegliedes (6) angeordnet ist.

13. Vorrichtung nach Anspruch 1 oder einem der folgenden, dadurch gekennzeichnet, dass die Nabe (40) der Schraubanordnung (16) drehfest aber axial beweglich am Flansch (49) des Werkzeugträgers (7) geführt und über eine Feder (45) axial verspannt ist.

14. Vorrichtung nach Anspruch 1 oder einem der folgenden, dadurch gekennzeichnet, dass das werkzeugseitige Kupplungsteil (9) und das gegen Verdrehung arretierbare Funktionsglied (10) des anderen Kupplungsteiles (8) je drei einander entgegengerichtete Anschlagbolzen (50, 51) zur Bildung der Schliessendstellung der Kupplungsteile (8, 9) aufweisen.

**Claims**

1. Device for the automatic gripping or releasing of a tool support (7) by the final transmission member (6) of a manipulator (1) of multi-axis construction, in which the final transmission member (6) and tool support carry coupling parts (8, 9) which can be screwed together, and the rotary drive of the final transmission member (6) is provided as a power source for screwing together the two coupling parts (8, 9) made ready for engagement by control of the manipulator (1), characterized in that the coupling part (8) connected to the final transmission member (6) consists of two functional members (10, 11) mounted together concentrically, of which one functional member (10) when the coupling parts (8, 9) approach, forms a rotary lock (13) with the coupling part (9) located on the tool support (7), and the other functional member (11) has a screw arrangement (17) which can be engaged with a screw arrangement (16) of the tool support (7), the two functional members (10, 11) being connected to each other via a locking mechanism (20) which can be released under the action of the rotary lock (13).

2. Device according to Claim 1, characterized in that the rotary lock (13) consists of at least one centring pin (14) which engages into an adapted aperture (15) in the opposite coupling part (9).

3. Device according to Claim 1 or 2, characterized in that the functional member (11) having the screw arrangement (17) has a radially extending pin (28) having locking elements (30) located thereon which, under axially acting spring force (34), engage into adapted mating locking elements (31) of the other functional member (10).

4. Device according to Claim 3, characterized in that the locking elements (30) are designed as rollers rotatably mounted on the pin (28), and the mating locking elements (31) are designed as radially extending grooves located in a flange plate (38).

5. Device according to Claim 3 or 4, characterized in that the pin (28) or its guide (35) is acted upon by an axially acting spring (34) which is supported on the screw arrangement (17).

6. Device according to Claim 1 or any of the following Claims, characterized in that the screw arrangement (16) has at least one screw thread section (39) having a large pitch at a small turning angle (52).

7. Device according to Claim 6, characterized in that the screw thread section (39) merges into a plane section (41) which extends approximately radially to the axis of rotation and in which, if necessary, a recess (42) for the latching of the screw element (37) engaging into the screw thread section (39) can be provided.

8. Device according to Claim 6 or 7, characterized in that the screw arrangement (16) on the tool side has a hub (40) having screw thread sections (39) which are made in its wall and into which rollers, rotatably mounted on a radially extending pin (36), engage as screw elements (37).

9. Device according to Claim 1 or any of the following Claims, characterized in that the functional member (11) having the screw arrangement (17) is designed as a hollow shaft (32) through which the two pins (28, 36), guiding the locking and screw elements (30, 37), pass radially, the pin (28) having a locking element (30) being guided in an axially movable manner in the hollow shaft (32) and being acted upon by a spring (34) arranged in the hollow shaft (32).

10. Device according to Claim 1 or any of the following Claims, characterized in that the connecting parts (24) for the transmission of power and transfer of cooland and/or pressure medium to the two supports (7) are arranged on the functional member (10) forming the rotary lock (13), and that the connecting mating parts (25), in the active position of the rotary lock (13), are arranged in a congruently opposite position on the tool support (7) or its coupling part (9).

11. Device according to Claim 1 or any of the following Claims, characterized in that the functional member (10) forming the rotary lock (13) and the tool support (7) have hollow-cylindrical walls (46, 47) which protrude towards one another and have chamfers (48) on the front ends as centring means.

12. Device according to Claim 1 or any of the following Claims, characterized in that the functional member (11) having the screw arrangement (17) is a component part of a disengagement safety device (27) which is arranged on the output flange (26) of the final transmission member (6).

13. Device according to Claim 1 or any of the following Claims, characterized in that the hub (40) of the screw arrangement (16) is guided in a non-rotational but axially movable manner on the flange (49) of the tool support (7) and is axially tensioned via a spring (45).

14. Device according to Claim 1 or any of the following Claims, characterized in the coupling part (9) on the tool side and the functional member (10), lockable against turning, of the other coupling part (8) each have three stop pins (50, 51), directed towards one another, for forming the closing end position of the coupling parts (8, 9).

**Revendications**

1. Dispositif pour saisir ou relâcher de façon automatique un porte-outil (7) au moyen du dernier organe de transmission (6) d'un manipulateur (1) comportant plusieurs axes, et dans lequel le dernier organe de transmission (6) et le porte-outil (7) portent des organes d'accouplement (8, 9) vissables l'un sur l'autre, et le dispositif d'entraînement rotatif du dernier organe de transmission (6) est prévu en tant que source d'énergie pour le vissage des deux organes d'accouplement (8, 9) placés dans un état prêt à engrener réciproquement, au moyen de la commande du manipulateur (1), caractérisé par le fait que l'organe d'accouplement (8) relié au dernier organe de transmission (6) est constitué de deux éléments fonctionnels (10, 11) montés concentriquement l'un pard rapport à l'autre et dont l'un (6) forme, lors du rapprochement des organes d'accouplement (8, 9), un dispositif de blocage en rotation (13), avec l'organe d'accouplement (9) situé sur le porte-outil (7), et dont l'autre (11) possède un dispositif vissable (17) qui peut être amené en prise avec un dispositif vissable (16) du porte-outil (7), les deux éléments fonctionnels (10, 11) étant reliés entre eux par l'intermédiaire d'un mécanisme d'arrêt (20) pouvant être désenclen- ché sous l'action du dispositif de blocage en rotation (13).

2. Dispositif suivant la revendication 1, caractérisé par le fait que le dispositif de blocage en rotation (13) est constitué par au moins un boulon de centrage (14) qui s'engage dans un évidement adapté (15) de l'organe d'accouplement opposé (9).

3. Dispositif suivant la revendication 1 ou 2, caractérisé par le fait que l'élément fonctionnel (11) comportant le dispositif vissable (17) comporte un boulon radial (28), sur lequel sont situés les organes d'arrêt (30), qui s'engagent, sous l'action d'une force (34) d'un ressort, agissant axialement, dans des organes d'arrêt antagonistes (31) de l'autre élément fonctionnel (10).

4. Dispositif suivant la revendication 3, caractérisé par le fait que les organes d'arrêt (30) sont réalisés sous la forme de rouleaux montés rotatifs sur le boulon (28) et que les organes d'arrêt antagonistes (31) sont réalisés sous la forme de cavités radiales ménagées dans une plaque formant bride (38).

5. Dispositif suivant la revendication 3 ou 4, caractérisé par le fait que le boulon (28) ou son guide (35) est chargé par un ressort (34) qui agit axialement et prend appui sur le dispositif vissable (17).

6. Dispositif suivant la revendication 1 ou l'une des suivantes, caractérisé par le fait que le dispositif vissable (16) comporte au moins une section filetée (39) qui possède un pas important pour un faible angle de rotation (52).

7. Dispositif suivant la revendication 6, caractérisé par le fait que la section filetée (39), qui s'étend approximativement radialement par rapport à l'axe de rotation et dans lequel peut être éventuellement ménagé un renfoncement (42) permettant l'encliquetage de l'organe vissable (37) s'engageant dans la section filetée (39).

8. Dispositif suivant les revendications 6 ou 7, caractérisé par le fait que le dispositif vissable (16) situé du côté de l'outil, possède un moyeu (40) muni de sections filetées (39), qui sont formées par usinage dans la paroi du moyeu et dans lesquelles s'engagent, en tant qu'organes vissables (37), des rouleaux montés rotatifs sur un boulon radial (36).

9. Dispositif suivant la revendication 1 ou l'une des suivantes, caractérisé par le fait que l'élément fonctionnel (11) comportant le dispositif vissable (17) est réalisé sous la forme d'un arbre creux (32), qui est traversé radialement par les deux boulons (28, 36) guidant les organes d'arrêt et les organes vissables (30, 37), le boulon (28) comportant les organes de blocage (30) étant réalisé de manière à être déplaçable axialement dans l'arbre creux (32) et étant chargé par un ressort (34) disposé dans l'arbre creux (32).

10. Dispositif suivant la revendication 1 ou l'une des suivantes, caractérisé par le fait que les organes de raccordement (24) pour la transmission de l'énergie, d'un fluide de refroidissement et/ou d'un fluide comprimé au porte-outil (7) sont disposés sur l'élément fonctionnel (10) formant le dispositif de blocage en rotation (13), et que les organes antagonistes de raccordement (25) sont disposés d'une manière coïncidente en vis-à-vis des organes de raccordement lorsque le dispositif de blocage en rotation (13) est dans sa position active sur le porte-outil (16) ou sur son organe d'accouplement (9).

11. Dispositif suivant la revendication 1 ou l'une des suivantes, caractérisé par le fait que l'élément fonctionnel (10) formant le dispositif de blocage en rotation (13) et le porte-outil (7) possèdent, comme moyens de centrage, des parois (46, 47) en forme de cylindres creux, qui s'interpénètrent et comportent des biseaux frontaux (48).

12. Dispositif suivant la revendication 1 ou l'une des suivantes, caractérisé par le fait que l'élément fonctionnel (11) possédant le dispositif vissable (17) fait partie d'un système de sécurité de débranchement, qui est monté sur la bride de sortie (26) d'un organe de transmission (6).

13. Dispositif suivant la revendication 1 ou l'une des suivantes, caractérisé par le fait que le moyeu (40) du dispositif vissable (16) est guidé d'une manière bloquée en rotation, mais déplaçable axialement sur la bride (49) du porte-outil (7) et est serré axialement par l'intermédiaire d'un ressort (45).

14. Dispositif suivant la revendication 1 ou l'une des suivantes, caractérisé par le fait que l'organe de couplage (9) situé du côté de l'outil et l'élément fonctionnel (10), qui peut être bloqué contre toute rotation, de l'autre organe de couplage (8) possèdent trois boulons de butée respectifs (50, 51), qui sont dirigés en sens opposé les uns des autres et servent à définir la position terminale de fermeture des organes d'accouplement (8, 9).

FIG. 1

FIG. 2

FIG. 3

FIG. 4

FIG. 5